Europäisches Patentamt

European Patent Office

Office européen des brevets

(19)

(11) Publication number: **0 051 461**
**A1**

(12) **EUROPEAN PATENT APPLICATION**

(21) Application number: **81305145.5**

(22) Date of filing: **29.10.81**

(51) Int. Cl.³: **B 23 K 35/30**
**B 23 K 35/14**

(30) Priority: **30.10.80 US 202227**

(43) Date of publication of application:
**12.05.82 Bulletin 82/19**

(84) Designated Contracting States:
**DE FR GB IT**

(71) Applicant: **ALLIED CORPORATION**
**Columbia Road and Park Avenue P.O. Box 2245R (Law Dept.)**
**Morristown New Jersey 07960(US)**

(72) Inventor: **DeCristofaro, Nicholas John**
**114 Hillside Avenue**
**Chatham New Jersey 07928(US)**

(72) Inventor: **Sexton, Peter**
**21 Samuelson Road**
**Weston Connecticut 06883(US)**

(74) Representative: **Myerscough, Philip Boyd et al,**
**J.A.Kemp & Co. 14, South Square Gray's Inn**
**London, WC1R 5EU(GB)**

(54) Homogeneous ductile brazing foils.

(57) A homogeneous, ductile brazing foil composed of metastable material having at least 50 percent glassy structure and a composition comprising as metal components nickel, at least one of molybdenum, tungsten and cobalt, and optionally one or both of iron and chromium in a total amount of 76 to 84 atom percent, as non-metal or metalloid component(s) one or more of boron, phosphorus, silicon and carbon in a total amount of 24 to 16 atom percent, and incidental impurities, the atom percentages of the composition being 0 to 6 percent iron, 0 to 21 percent chromium, 0 to 4 percent molybdenum, 0 to 5 percent tungsten, 0 to 20 percent cobalt, 0 to 19 percent boton, 0 to 12 percent silicon, 0 to 22 percent phosphorus, 0 to 3 percent carbon and the balance essentially nickel and incidental impurities.

EP 0 051 461 A1

- 1 -

DESCRIPTION

TITLE: "HOMOGENEOUS, DUCTILE BRAZING FOILS"

This invention relates to brazing of metal parts and, in particular, to a homogeneous, ductile brazing material useful in brazing stainless steels and high nickel alloys.

Brazing is a process for joining metal parts, often of dissimilar composition, to each other. Typically, a filler metal that has a melting point lower than that of the metal parts to be joined together is interposed between the metal parts to form an assembly. The assembly is then heated to a temperature sufficient to melt the filler metal. Upon cooling, a strong, corrosion resistant, leak-tight joint is formed.

As a class, stainless steel alloys are more difficult to braze than are carbon and low-alloy steels. This is apparently due to the high chromium content associated with stainless steels. The formation of chromium oxide on the surfaces of stainless steels prevents wetting by the molten metal filler. Consequently, heating and brazing must be performed on carefully cleaned metal parts either in vacuum or under strongly reducing conditions, such as dry hydrogen or cracked ammonia. Alternatively, chemically active fluxes which dissolve the oxide must be used. However, extensive post-brazing cleaning is required to remove flux residues.

In EPC Application 80100172.8 (Publication No. 0014337 of 20 August 1980)we have described as a filler metal for a brazed metal article, a homogeneous, ductile brazing foil composed of metastable material having at least 50 percent glassy structure and having a thickness not in excess of 0.0025 inch $(6.35 \times 10^{-3}$ cm), the filler metal preferably having a composition consisting essentially of 0 to 4 atom percent iron, 0 to 21 atom percent chromium, 0 to 19 atom percent boron, 0 to 12 atom percent silicon, 0 to 22 atom percent phosphorus and the balance essentially nickel and incidental impurities, the total of iron, chromium and nickel being from 76 to 84 atom percent and the total of boron, phosphorus and silicon being from 16 to 24 atom percent.

The present invention provides a homogeneous, ductile brazing foil composed of metastable material having at least 50 percent glassy structure and a composition comprising as metal component(s) nickel and optionally one or both of iron and chromium in a total amount of 76 to 84 atom percent, as non-metal or metalloid component(s) one or more of boron, phosphorus and silicon in a total amount of 24 to 16 atom percent, and incidental impurities characterised in that the metal component(s) include at least one of molybdenum, tungsten and cobalt and in that the non-metal or metalloid component(s) can include carbon, the atom percentages of the composition being 0 to 6 percent iron, 0 to 21 percent chromium, 0 to 4 percent molybdenum, 0 to 5 percent tungsten, 0 to 20 percent cobalt, 0 to 19 percent boron, 0 to 12 percent silicon, o to 22 percent phosphorus, 0 to 3 percent carbon and the balance essentially nickel and incidental impurities, the total of iron, chromium, molybdenum, tungsten, cobalt and nickel being 76 to 84 atom percent and the total of boron, silicon, phosphorus and carbon being 24 to 16 atom percent.

The inclusion of at least one of molybdenum, tungsten and cobalt in brazing foils of the present invention makes possible increased brazed joint strengths.

The homogeneous brazing foil of the invention is fabricated by a process which comprises forming a melt of the composition and quenching the melt on a chill surface, such as a rotating quench wheel, at a rate of at least $10^5$°C/sec (see U.S. Patents 3856513 and 4148973).

The filler metal composition is easily fabricable as homogeneous, ductile foil, which is useful for brazing as cast. Advantageously, the metal foil can be stamped into complex shapes to provide braze preforms.

Using the homogeneous, ductile brazing foil of the invention there is no need for binders and pastes that would otherwise form voids and contaminating residues. Also, the filler material provided by the invention enables alternative brazing processes of stainless steels, e.g. dip brazing in molten salts, to be employed.

As in any brazing process, the brazing material must have a melting point sufficiently high to provide strength to meet service requirements of the metal parts brazed together but not so high as to make difficult the brazing operation. Further, the filler material must be compatible, both chemically and metallurgically, with the materials being brazed. The brazing material must be more noble than the metal being brazed to avoid corrosion.

The brazing foil of the invention will generally be less than 0.064 mm thick, preferably 0.038 to 0.064 mm thick and most preferably 0.013 to 0.036 mm thick. The compositions of the invention are compatible with and more noble than stainless steels and are suitable for brazing austenitic, martensitic and ferritic stainless steels, as well as nickel base alloys.

By homogeneous is meant that the foil, as produced, is of substantially uniform composition in all dimensions. By ductile is meant that the foil can be bent to a round radius as small as ten times the foil thickness without fracture.

Examples of brazing alloy compositions within the scope of the invention are set out in Table I:-

TABLE I

Composition, %

| | Fe | Ni | Cr | Mo | W | B | Si | Co | C |
|---|---|---|---|---|---|---|---|---|---|
| Ni-Cr-Fe-W-B-Si | | | | | | | | | |
| atom % | 3.2 | 62.9 | 11.8 | – | 1.7 | 11.8 | 6.4 | – | 2.1 |
| weight % | 3.5 | 72.0 | 12.0 | – | 6.0 | 2.5 | 3.5 | – | 0.5 |
| Ni-Cr-Fe-Co-Mo-B | | | | | | | | | |
| atom % | 5.0 | 45.0 | 10.0 | 4.0 | – | 16.0 | – | 20.0 | – |
| weight % | 5.4 | 51.0 | 10.0 | 7.4 | – | 3.4 | – | 22.8 | – |

- 4 -

The brazing temperature of the brazing alloys of the invention ranges from 925° to 1205°C (1700° to 2200°F). The temperature of brazing is thus above the sensitizing temperature range of the 300 series stainless steels. This is in contrast to the brazing temperatures of silver brazing alloys, which fall within the sensitizing temperature range. As is well-known, when 18-8 stainless steels are heated at 510° to 790°C (950° to 1450°F) for any appreciable length of time, they become sensitized or susceptible to intergranular corrosion. This is apparently due to the depletion of chromium in the grain-boundary areas. Sensitizing is thus avoided by use of the brazing foils of the invention.

A variety of techniques are available for fabricating continuous ribbon, wire and sheet. Typically, a particular composition is selected, powders or granules of the requisite elements in the desired portions are melted and homogenized, and the molten alloy is rapidly quenched on a chill surface, such as a rapidly rotating metal cylinder.

Under these quenching conditions, a metastable, homogeneous, ductile material is obtained. The metastable material may be glassy, in which case there is no long range order. X-ray diffraction patterns of glassy metal alloys show only a diffuse halo, similar to that observed for inorganic oxide glasses. Such glassy alloys must be at least 50% glassy to be sufficiently ductile to permit subsequent handling, such as stamping complex shapes from ribbons of the alloys. Preferably, the glassy metal alloys are at least 80% glassy, and most preferably substantially (or totally) glassy, to attain superior ductility.

The metastable phase may also be a solid solution of the consituent elements. In the case of the alloys of the invention, such metastable, solid solution phases are not ordinarily produced under conventional processing techniques employed in the art of fabricating crystalline alloys. X-ray diffraction patterns of the
solid solution alloys show the sharp diffraction peaks
characteristic of crystalline alloys, with some
broadening of the peaks due to desired fine-grained size
of crystallites. Such metastable materials are also
ductile when produced under the conditions described
above.

The brazing material of the invention is
advantageously produced in foil (or ribbon) form, and
may be used in brazing applications as cast, whether
the material is glassy or a solid solution. Alternatively,
foils of glassy metal alloys may be heat treated to
obtain a crystalline phase, preferably fine-grained, in
order to promote longer die life when stamping of
complex shapes is contemplated.

Foils as produced by the processing described
above typically are 0.013 to 0.064 mm thick, which is
also the desired spacing between bodies being brazed.
Foil thickness, and hence spacing of 0.013 to 0.036 mm
maximizes the strength of the braze joint. Thinner
foils stacked to form a thickness of greater than
0.064 mm may also be employed. Further, no fluxes are
required during brazing, and no binders are present in
the foil. Thus, formation of voids and contaminating
residues is eliminated. Consequently, the ductile
brazing ribbons of the invention provide both ease of
brazing, by eliminating the need for spacers, and minimal
post-brazing treatment.

In general, the strength of the resulting brazed
joints is greater than that of brazed joints formed using
brazing foils of otherwise similar composition but not
containing at least one of molybdenum, tungsten and
cobalt.

### EXAMPLES

#### Example 1

Ribbons 2.5 to 25.4 mm (0.10 to 1.00 inch) wide and
13 to 60 μm (0.0005 to 0.0025 inch) thick were formed
by squirting a melt of the particular composition by overpressure of argon onto a rapidly rotating copper chill wheel (surface speed 915 to 1830 m/min). Metastable, homogeneous ribbons of substantially glassy alloys having the following compositions in weight percent and atom percent were produced:

## Composition

| Sample No. | | Fe | Ni | Cr | B | Si | W | Mo | Co | C |
|---|---|---|---|---|---|---|---|---|---|---|
| 1 | (wt%) | 3.5 | 72.0 | 12.0 | 2.5 | 3.5 | 6.0 | – | – | 0.5 |
|   | (at%) | 3.2 | 62.9 | 11.8 | 11.8 | 6.4 | 1.7 | – | – | 2.1 |
| 2 | (wt%) | 3.5 | 62.0 | 12.0 | 2.5 | 3.5 | 16.0 | – | – | 0.5 |
|   | (at%) | 3.4 | 57.6 | 12.6 | 12.6 | 6.8 | 4.7 | – | – | 2.3 |
| 3 | (wt%) | 3.5 | 68.1 | 10.0 | 2.5 | 3.5 | 12.0 | – | – | 0.4 |
|   | (at%) | 3.4 | 62.0 | 10.3 | 12.4 | 6.7 | 3.5 | – | – | 1.7 |
| 4 | (wt%) | 5.4 | 51.0 | 10.0 | 3.4 | – | – | 7.4 | 22.8 | – |
|   | (at%) | 5.0 | 45.0 | 10.0 | 16.0 | – | – | 4.0 | 20.0 | – |

## Example 2

Test specimens were cut from 3.175 mm thick AISI type 316SS strip. Brazing alloy of the invention of nominal composition of Sample No. 1, 6.4 mm (0.25 inch) wide and 37 $\mu$m (0.0015 inch) thick was used to braze three test specimens.

Lap shear test specimens were prepared as per AWS C3.2. The lap dimension was carefully controlled at 9.525 mm (3x thickness of the base metal).

Brazing was done in a vacuum furnace. The furnace was evacuated to 0.1 $\mu$m and operated at 1175°C (2150°F) for 15 minutes.

Upon brazing, all shear specimens were subjected to tensile shear testing with the following results

| Metal | Braze Filler | Joint Shear Strength, MPa (psi) | |
|---|---|---|---|
| | | Range | Avg. |
| 316 SS | 2 ribbons | 118.4-169.3 (17173 - 24,553) | 152.1 (22,062) |

In all cases, the test specimens brazed with Sample No. 1 failed in the base metal. Therefore, the values reported are lower bounds.

## Example 3

Test specimens were cut from 3.175 mm thick AISI type 316SS strip. Brazing alloy of the invention of nominal composition of Sample No. 2, 6.4 mm (0.25 inch) wide and 37 $\mu$m (0.0015 inch) thick was used to braze three test specimens.

Lap shear test specimens were prepared as per AWS C3.2. The lap dimension was carefully controlled at 9.525 mm (3x thickness of the base metal).

Brazing was done in a vacuum furnace. The furnace was evacuated to 0.1 $\mu$m and operated at 1175°C (2150°F) for 15 minutes.

Upon brazing, all shear specimens were subjected to tensile shear testing with the following results:

- 10 -

Joint Shear Strength, MPa (psi)

| Metal | Braze Filler | Range | Avg. |
|-------|--------------|-------|------|
| 316 SS | 2 ribbons | 134.2-143.8 (19467 - 20,853) | 140.6 (20,391) |

In all cases, the test specimens brazed with Sample No. 2 failed in the base metal. Therefore, the values reported are lower bounds.

## Example 4

Test specimens were cut from 3.175 mm thick AISI type 316SS strip. Brazing alloy of the invention of nominal composition of Sample No. 3, 6.4 mm (0.25 inch) wide and 37 μm (0.0015 inch) thick was used to braze two test specimens.

Lap shear test specimens were prepared as per AWS C3.2. The lap dimension was carefully controlled at 9.525 mm (3x thickness of the base metal).

Brazing was done in a vacuum furnace. The furnace was evacuated to 0.1 μm and operated at 1175°C (2150°F) for 15 minutes.

Upon brazing, all shear specimens were subjected to tensile shear testing with the following results:

Joint Shear Strength, MPa (psi)

| Metal | Braze Filler | Range | Avg. |
|-------|--------------|-------|------|
| 316 SS | 2 ribbons | 145.6-149.7 (21,120-21,707) | 147.7 (21,414) |

In all cases, the test specimens brazed with Sample No. 3 failed in the base metal. Therefore, the values reported are lower bounds.

## Example 5

Test specimens were cut from 3.175 mm thick AISI type 316SS strip. Brazing alloy of the invention of nominal composition of Sample No. 4, 25.4 mm (1.0 inch) wide and 37 μm (0.0015 inch) thick was used to braze three test specimens.

Lap shear test specimens were prepared as per AWS C3.2. The lap dimension was carefully controlled at 9.525 mm (3x thickness of the base metal).

- 11 -

Brazing was done in a vacuum furnace. The furnace was evacuated to 0.1 μm and operated at 1175°C (2150°F) for 15 minutes.

Upon brazing, all shear specimens were subjected to tensile shear testing with the following results:

| | | Joint Shear Strength, MPa (psi) | |
|---|---|---|---|
| Metal | Braze Filler | Range | Avg. |
| 316 SS | 2 ribbons | 154.5 -174.7 (22,400- 25,333) | 167.9(24,355) |

Two of the three test specimens brazed with Sample No. 4 failed in the base metal. The third test specimen failed in the joint.

The data of Examples 2 to 5 demonstrate increased joint strength with the addition of molybdenum, tungsten or cobalt to the filler metal alloy as compared with joint strength values obtained under comparable circumstances in accordance with EPA 80100172.8 (Publication No. 0014335 A).

CLAIMS

1.   A homogeneous, ductile brazing foil composed of metastable material having at least 50 percent glassy structure and a composition comprising as metal component(s) nickel and optionally one or both of iron and chromium in a total amount of 76 to 84 atom percent, as non-metal or metalloid component(s) one or more of boron, phosphorus and silicon in a total amount of 24 to 16 atom percent, and incidental impurities characterised in that the metal component(s) include at least one of molybdenum, tungsten and cobalt and in that the non-metal or metalloid component(s) can include carbon, the atom percentages of the composition being 0 to 6 percent iron, 0 to 21 percent chromium, 0 to 4 percent molybdenum, 0 to 5 percent tungsten, 0 to 20 percent cobalt, 0 to 19 percent boron, 0 to 12 percent silicon, 0 to 22 percent phosphorus, 0 to 3 percent carbon and the balance essentially nickel and incidental impurities, the total of iron, chromium, molybdenum, tungsten, cobalt and nickel being 76 to 84 atom percent and the total of boron, silicon, phosphorus and carbon being 24 to 16 atom percent.

2.   A brazing foil according to claim 1 which is at least 80% glassy.

3.   A brazing foil according to claim 1 which is substantially entirely glassy.

4.   A brazing foil according to claim 1, 2 or 3 which is from 0.038 to 0.064 mm (0.0015 to 0.0025 inch) thick.

5.   A brazing foil according to claim 4 which is from 0.013 to 0.036 mm (0.0005 to 0.0014 inch) thick.

**0051461**

European Patent
Office

EUROPEAN SEARCH REPORT

Application number

Ep 81305145.5

# DOCUMENTS CONSIDERED TO BE RELEVANT

| Category | Citation of document with indication, where appropriate, of relevant passages | Relevant to claim |
|---|---|---|
| D,X | <u>EP - A1 - 0 014 335</u> (ALLIED CHEMICAL CORPORATION) <br> * Claims * <br> -- | 1,4,5 |
| D,X | <u>US - A - 4 148 973</u> (P. SEXTON et al.) <br> * Claims * <br> -- | 1,2,4,5 |
| | <u>GB - A - 1 559 038</u> (ALLIED CHEMICAL CORPORATION) <br> * Claims * <br> -- | 2,3 |
| | <u>GB - A - 1 511 972</u> (EUTECTIC CORPORATION) <br> * Page 3, table; claims 1,10 * <br> -- | 1 |
| | <u>GB - A - 1 297 758</u> (DEUTSCHE EDELSTAHLWERKE AKTIENGESELLSCHAT) <br> * Claims * <br> ---- | 1 |

**CLASSIFICATION OF THE APPLICATION (Int. Cl.)**

B 23 K 35/30

B 23 K 35/14

**TECHNICAL FIELDS SEARCHED (Int. Cl.³)**

B 23 K

**CATEGORY OF CITED DOCUMENTS**

X: particularly relevant

A: technological background

O: non-written disclosure

P. intermediate document

T: theory or principle underlying the invention

E: conflicting application

D: document cited in the application

L: citation for other reasons

&: member of the same patent family corresponding document

X | The present search report has been drawn up for all claims

| Place of search | Date of completion of the search | Examiner |
|---|---|---|
| VIENNA | 13-01-1982 | SLAMA |

EPO Form 1503.1  06.78